# EUROPÄISCHE PATENTSCHRIFT

(11) **EP 1 310 032 B1**
(45) Veröffentlichungstag und Bekanntmachung des Hinweises auf die Patenterteilung: **26.10.2005**
(21) Anmeldenummer: 01962658.9
(22) Anmeldetag: 17.08.2001
(51) Int. Cl.: H02J 3/18

(54) **SCHALTUNGSANORDNUNG ZUR STATISCHEN ERZEUGUNG EINER VERÄNDERBAREN ELEKTRISCHEN LEISTUNG**
CIRCUIT ARRANGEMENT FOR THE STATIC GENERATION OF A VARIABLE ELECTRIC OUTPUT
CIRCUIT POUR LA PRODUCTION STATIQUE D'UNE PUISSANCE ELECTRIQUE VARIABLE

(30) Priorität: 18.08.2000 DE 10042870; 06.02.2001 DE 10107397
(43) Veröffentlichungstag der Anmeldung: 14.05.2003
(73) Patentinhaber: Vithayathil, John, Portland, OR 97210 (US)
(72) Erfinder: Vithayathil, John, Portland, OR 97210 (US); Kadry, Sadek, 91056 Erlangen (DE)
(74) Vertreter: Kirschner, Klaus Dieter
(86) Internationale Anmeldenummer: PCT/DE2001/003161
(87) Internationale Veröffentlichungsnummer: WO 2002/015362

(56) Entgegenhaltungen:
- CH-A- 617 797
- DE-A- 3 045 574
- US-A- 3 195 038
- US-A- 3 955 134
- US-A- 4 104 576
- US-A- 4 306 283
- US-A- 4 375 076

## Beschreibung

### Hintergrund der Erfindung:

Die Erfindung liegt allgemein auf dem Gebiet der statischen Erzeugung einer elektrischen Leistung, speziell auf dem Gebiet der statischen Blindleistungskompensationssysteme. Gegenwärtig werden die statischen Blindleistungssysteme (STATIC VAR SYSTEMS) in zwei breite Kategorien eingeteilt:
(1) Statische Blindleistungssysteme, die auf der Blindleistungserzeugung mittels Drosseln oder Kondensatoren beruhen;
(2) Statische Kompensationssysteme (Statcoms), die darauf beruhen, dass mittels einer sinusförmigen Spannungsquelle, die sich von der Spannung des Energiesystems unterscheidet und mittels leistungselektronischer Schaltkreise erzeugt ist, aus dem Energiesystem Blindleistung entnommen oder in dieses Energiesystem Blindleistung eingespeist wird und zwar durch Regelung der Größe der von dieser separaten Spannungsquelle erzeugten Spannung. Zur Zeit ist der zweitgenannte Typ von statischen Blindleistungskompensatoren wesentlich kostenaufwendiger als der erstgenannte Typ (DE-Z "ABB Technik", 5/99, S. 4-17).

Die vorliegende Erfindung bezieht sich mehr auf die erstgenannte Kategorie. Gegenwärtig gibt es in dieser Kategorie drei Typen:
(1) Mittels Thyristoren geschaltete Drosseln (TSR),
(2) mittels Thyristoren geschaltete Kondensatoren (TSC) und
(3) mittels Thyristoren geregelte Drosseln (TCR).

Bei den Typen TSR und TSC werden als statische Schalter anti-parallel geschaltete Thyristorventile verwendet, um Drosseln oder Kapazitäten ein- oder auszuschalten und dadurch den Blindleistungsfluss zu regeln. Eine solche Ein/Aus-Regelung ermöglicht Veränderungen des Blindleistungsflusses in diskreten Schritten. Eine wirtschaftliche Auslegung solcher Systeme schließt üblicherweise die Verwendung eines Stufentransformators ein, um die Verbindung zu den Ventilen und der Drossel oder dem Kondensator herzustellen. Um mit einer solchen Ein/Aus-Regelung eine Feinregelung der Blindleistungsversorgung zu erreichen, benötigt man eine größere Anzahl von statischen Blindleistungskompensatoren, die dann parallel zu schalten sind. Eine solche Anlage würde eine große Anzahl von Thyristorventilen erfordern, die für die volle Spannung ausgelegt sind. Dies würde die Kosten in die Höhe treiben.

Im Falle des Types TCR werden die antiparallel geschalteten Thyristorventile nicht nur zum Ein/Aus-Schalten des statischen Blindleistungskompensators (SVC) benutzt, sondern auch dazu, den Blindleistungsfluss durch Einstellung des Zündwinkels der Ventile zu verändern. Veränderung des Zündwinkels verändert die Zeitspanne, während der die Drossel einen Strom führt, und verändert damit den wirksamen Widerstand der Drossel. Abweichend von dem Typen TSR und TSC erlaubt der Typus TCR eine kontinuierliche Regelung der Blindleistung. Jedoch führen die Stromunterbrechungen des durch die Drossel fließenden Stromes zu Oberwellen, was die Verwendung sehr teurer Oberwellenfilter erforderlich macht.

Zur Erzeugung einer veränderbaren elektrischen Spannung oder eines elektrischen Stromes im Niederspannungsbereich ist es an sich bekannt, einen Transformator auf der Sekundärseite mit mehreren Teilwicklungen zu versehen, die elektrisch hintereinander geschaltet sind, wobei die Hintereinanderschaltung jeweils mit einer Brückenschaltung erfolgt, die in jedem Brückenzweig zwei antiparallel geschaltete statische Schalter aufweist. Diese Brückenschaltungen sind - gegebenenfalls zusammen mit einer Teilwicklung, der keine Brückenschaltung zugeordnet ist - elektrisch parallel zu einem Verbraucher angeordnet (US 3,195,038 A, Fig. 7 und 8).

Mit der in der US 3,195,038 vorgeschlagenen Vorrichtung zur Spannungs- oder Stromregulierung ist die an einen Verbraucher abzugebende Gesamtleistung jedoch nur bedingt und nur in stark eingeschränkten Wertebereichen einstellbar.

Durch die vorliegende Erfindung sollen die hauptsächlichen Nachteile der bekannten Maßnahmen zur Blindleistungskompensation, die mit Ein/Aus-Schaltung und Widerstandsregelung arbeiten, überwunden werden. Die Erfindung behält den Vorteil bei, keine Oberwellenfilter zu benötigen, obwohl der Blindleistungsfluss in Schritten veränderbar ist, und erreicht dies in einer Art und Weise, die keine auffällige Zunahme der Kosten für Thyristorventile zur Folge hat.

Ausgehend von einer Schaltungsanordnung mit den Merkmalen des Oberbegriffes des Patentanspruches 1 sind zur Lösung dieser Aufgabe verschiedene Schaltungsanordnungen gemäß den Patentansprüchen 1 bis 3 und 5 vorgesehen, die auf dem gemeinsamen Gedanken beruhen, dass der Verbraucher sowohl von einem Kondensator als auch von einer Drossel gebildet wird und dass die an diesen Verbraucher abgegebene Gesamtleistung mit Hilfe von sowohl dem Kondensator als auch der Drossel zugeordneten sekundären Teilwicklungen eines Transformators und mit Hilfe von diesen Teilwicklungen zugeordneten Antiparallelschaltungen statischer Schalter variabel einstellbar ist.

Kurze Beschreibung von in der Zeichnung dargestellten Schaltungsanordnungen zur Ausführung der Erfindung:
Figur 1 zeigt die prinzipielle Vorgehensweise, um eine gemäß der vorliegenden Erfindung ausgebildete Anordnung zu erhalten, wobei diese Anordnung auf der Sekundärseite eines Transformators zwei Steuerwicklungen und eine Festwicklung aufweist, um einen spannungsgeregelten, mittels Thyristoren geschalteten Kondensator zu erhalten.
Figur 2 zeigt die gleiche Vorgehensweise für eine Anordnung, bei der auf der Sekundärseite eines Transformators drei Steuerwicklungen und eine Festwicklung vorgesehen sind, um eine spannungsgeregelte, mittels Thyristoren geschaltete Drossel zu erhalten.
Figur 3 zeigt ein erstes Ausführungsbeispiel der Erfindung, und zwar eine Anordnung für einen spannungsgeregelten statischen Blindleistungskompensator (VCSVC) mit getrennten sekundären Transformatorwicklungen für die Regelung der Spannungen, mit denen ein Kondensator und eine Drossel beaufschlagt werden.
Figur 4 zeigt ein zweites Ausführungsbeispiel der Erfindung, und zwar eine Anordnung für einen VCSVC mit gemeinsamen sekundären Transformatorwicklungen für Kondensator und Drossel aber getrennten Ventilbrücken für die Regelung der Spannungen, mit denen der Kondensator und die Spule beaufschlagt werden.
Figur 5 zeigt ein drittes Ausführungsbeispiel der Erfindung, und zwar eine Anordnung eines VCSVC mit gemeinsamem Transformator und gemeinsamen Ventilbrücken für den Kondensator und die Drossel und mit zusätzlichen statischen Schaltern für die Auswahl des Typs des Blindleistungsflusses.
Figur 6 zeigt ein viertes Ausführungsbeispiel der Erfindung, und zwar eine vereinfachte Ausgestaltung einer Anordnung eines VCSVC, die für einen Arbeitsbereich von induktiver bis kapazitiver Blindleistung vorgesehen ist.

### Detaillierte Beschreibung der Schaltungsanordnungen:

Im Rahmen der vorliegenden Erfindung wird eine Spannung an einen Kondensator und/oder eine Drossel durch einen Transformator T gelegt, der mehrere Sekundärwicklungen aufweist, die dazu vorgesehen sind, um mit Hilfe von statischen Schaltern BBS die Sekundärwicklungen in verschiedener Weise so miteinander zu verbinden, dass die angelegte Spannung in kleinen Schritten verändert werden kann. Gemäß den Figuren ist der aus einer Wechselspannungsquelle U gespeiste Transformator sekundärseitig mit einer festen Wicklung W_{f} und einer gewissen Anzahl von Steuerwicklungen Wᵢ (1...n) versehen. Jede der Steuerwicklungen ist an vier bidirektionale statische Schalter BSS 1...4 angeschlossen, z. B. an antiparallel geschaltete Thyristorventile, die in einer Brückenschaltung B₁ bzw. B₂ angeordnet sind.

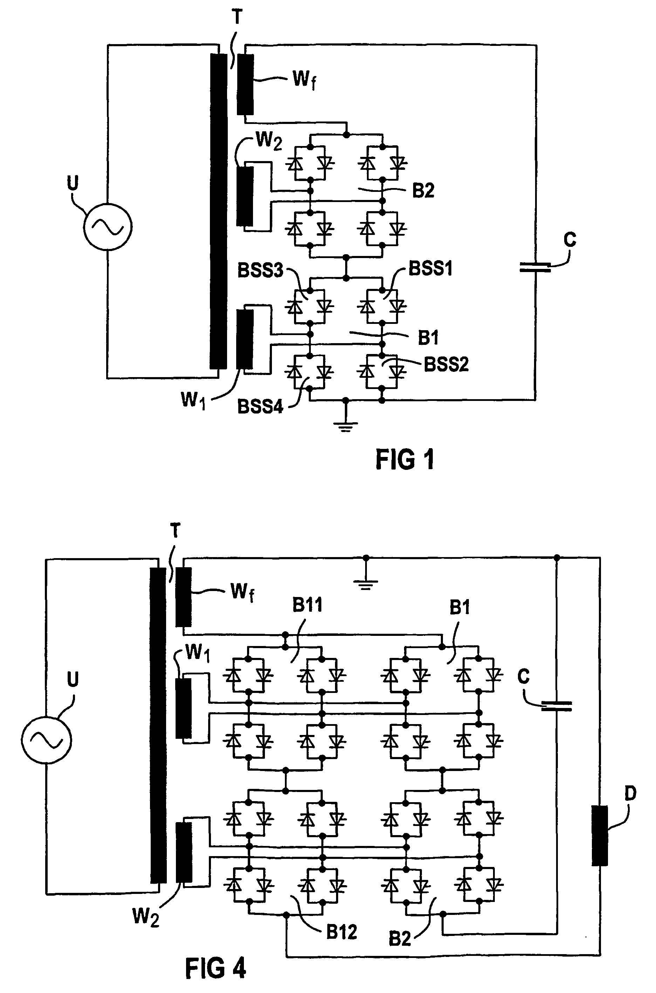

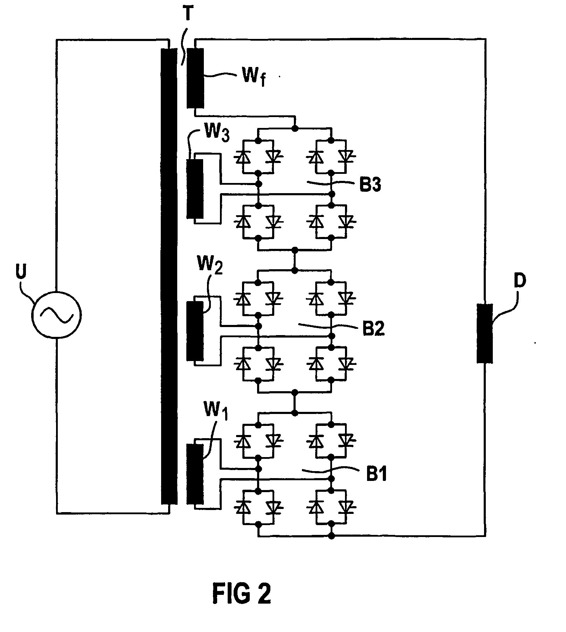

Figur 1 zeigt eine solche Anordnung mit zwei Steuerwicklungen W₁ und W₂ für einen spannungsgeregelten, mittels Thyristoren geschalteten Kondensator C. Eine ähnliche Anordnung für eine spannungsgeregelte, mit Thyristoren geschaltete Drossel (VCTSR) mit drei Steuerwicklungen W₁, W₂ und W₃ ist in Figur 2 gezeigt.

Bei Einschaltung von jeweils zwei sich in der Brückenschaltung gegenüberliegenden Schaltern BBS bei gleichzeitiger Blockierung der beiden anderen Schalter ist es möglich, die entsprechende Steuerwicklung auf drei verschiedene Weisen mit den übrigen Wicklungen zu verbinden:
(1) In Serie mit der Festwicklung W_{f} in der Weise, dass sich die Spannungen der Festwicklung und der korrespondierenden Steuerwicklung in Phase befinden.
(2) In Reihe mit der Festwicklung, wobei die Spannungen der Festwicklung und der korrespondierenden Steuerwicklung in Gegenphase zueinander sind; oder
(3) die Steuerwicklung wird umgangen.

Die Anzahl der Steuerwicklungen und deren Spannungsauslegung bestimmen die Anzahl der Schritte und die Größe der Schritte. Um einheitliche Schrittgrößen mit einer möglichst kleinen Zahl an Steuerwicklungen zu erreichen, wird die Spannung der Steuerwicklungen Wᵢ so gewählt, dass sie V₀ x 3⁽ⁱ⁻¹⁾ beträgt, wobei
V₀ die kleinste Schrittgröße ist,
n die Anzahl der Steuerwicklungen und
i eine ganze Zahl mit den Werten von 1 bis n.
In Figur 1, wo zwei Steuerwicklungen W₁ und W₂ vorgesehen sind, ist es möglich, neun Kombinationen der angelegten Spannung zu erhalten: Zunächst V_{f}, sodann V_{f} +/- V₀, weiterhin V_{f} +/- 2 V₀, weiterhin V_{f} +/- 3 V₀ und V_{f} +/- 4 V₀, wobei V_{f} die Spannung der Festwicklung ist. Wenn V_{f} = 4 V₀ ist, kann die an den Kondensator angelegte Spannung zwischen 0 und 8 V₀ in acht gleichen Schritten verändert werden. Da eine Spannung von 0 erreicht werden kann, wenn alle Ventile BBS blockiert sind, erhält man - sofern man V_{f} = 5 V₀ macht - neun Spannungsschritte zwischen 0 und 9 V₀

In ähnlicher Weise ist es, wie in Figur 2 gezeigt, mit drei Steuerwicklungen W₁, W₂ und W₃ möglich, die an die Drossel D angelegte Spannung in 27 Schritten zu verändern. Grundsätzlich kann man, wenn man n Steuerwicklungen vorsieht, 3ⁿ Schritte erzielen.

Die Spannungsänderungen werden in diskreten Schritten, also diskontinuierlich vorgenommen. Aus praktischer Sicht kann man die Schrittgrößen jedoch so klein wie erforderlich machen, indem man die Anzahl der Steuerwicklungen erhöht - prinzipiell so klein, um im Rahmen der Messgenauigkeit ununterscheidbar zu sein.
Die Blindleistungsregelung wird üblicherweise für Zwecke der Regelung einer Systemspannung verwendet, die normalerweise nicht auf einen bestimmten Wert geregelt wird, sondern nur in einer gewissen Bandbreite gehalten werden muss. Es ist daher angemessen, wenn die Schrittgröße in der an die Drossel oder den Kondensator angelegten Spannung so klein ist, dass die resultierende Änderung in der Blindleistungsversorgung Spannungsänderungen in dem zu regelnden Spannungssystem bewirkt, die klein sind im Vergleich zu dem spezifizierten Spannungsband.

Es ist möglich, die Steuerung der Blindleistung einer solchen Anordnung tatsächlich kontinuierlich zu machen, wenn man eine besondere Sekundärwicklung vorsieht, welche eine zusätzlich angeordnete, mittels Thyristoren gesteuerte Drossel (TCR) versorgt. Die Baugröße einer solchen Ergänzungsmaßnahme braucht nicht besonders groß zu sein, nur so groß, wie es die größte Schrittweite bei Veränderung der Blindleistung für Schrittweiten der an das Blindleistungselement angelegten Spannung erfordert. Dann erfolgt die Grobsteuerung der Blindleistungsversorgung durch die schrittweisen Veränderungen der Spannung, die an den Blindwiderstand angelegt wird, und zwischen diesen Schritten wird eine zusätzliche Feinsteuerung durch die Steuerung des TCR-Elementes, also der mittels Thyristoren gesteuerten zusätzlichen Drossel, erzielt. Die Baugröße des TCR-Baugruppe kann klein genug gemacht werden, um Oberwellen, die aus der Arbeitsweise des TCR-Elementes resultieren, so klein zu machen, dass keine Oberwellenfilter erforderlich sind.

Anstelle der Festwicklung kann auch eine Steuerwicklung vorgesehen sein, so dass alle Wicklungen des Transformators als Steuerwicklungen ausgebildet sind. Jedoch würde eine solche Ausgestaltung die erforderliche Gesamtzahl der statischen Steuerschalter erhöhen.

Es ist weder notwendig noch immer wünschenswert, alle Schrittweiten der Spannung gleich groß zu machen. Blindleistung ist proportional dem Quadrat der angelegten Spannung. Wenn die an einen Blindwiderstand angelegte Spannung von V auf V + V₀ vergrößert wird, führt dies zu einer Änderung in der Blindleistung um den Wert V₀² + 2 V x V₀. Je Höher der Ausgangswert der Spannung, um so größer ist die Schrittweite bei der Veränderung der Blindleistung. Daher ist eine größere Schrittweite bezüglich der angelegten Spannung für die ersten Schritte akzeptierbar. Ein Weg, um nur den ersten Schritten eine größere Schrittweite zu geben und die übrigen Schritte gleichgroß zu machen, besteht darin, die Spannung der Festwicklung relativ groß zu wählen. Wenn beispielsweise, wie im Falle der Figur 1 mit zwei Steuerwicklungen, V_{f} = 8 x V₀ ist, dann beträgt der kleinste Wert der angelegten Spannung 4 x V₀, und jeder folgende Schritt besteht aus Stufen der Größe V₀.

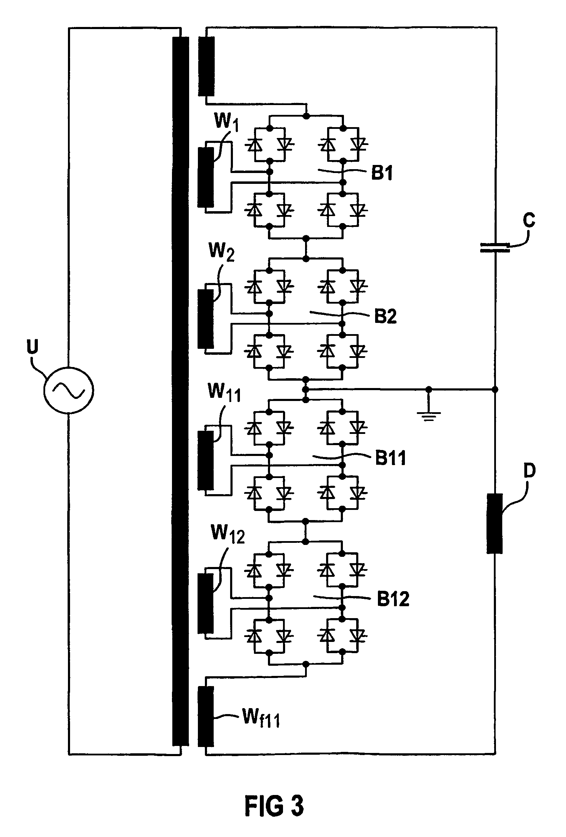

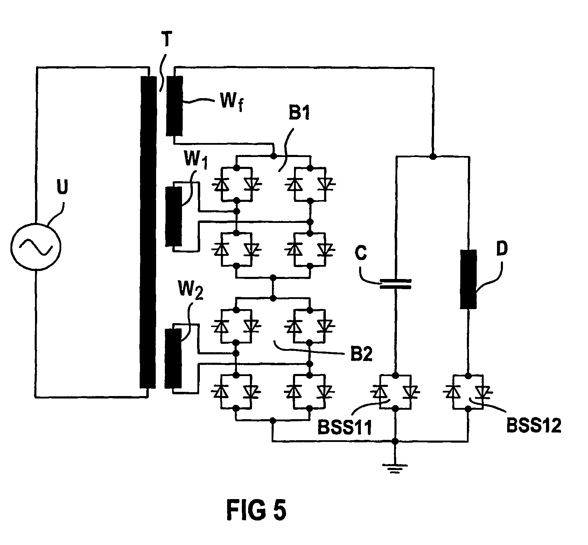

Gemäß der Erfindung gibt es verschiedene Möglichkeiten, die Anordnungen für kapazitive und induktive Blindleistungsversorgung derart zu kombinieren, dass man einen spannungsgesteuerten, statischen Blindleistungskompensator (VCSVC) mit einem spezifischen Arbeitsbereich von induktiver bis kapazitiver MVAR zu erhalten. Eine Methode würde sein, getrennte Sekundärwicklungen W_{f1}, W₁ und W₂ sowie W_{f11} W₁₁ und W₁₂ des Transformators mit jeweils eigenen Ventilgruppen B₁ und B₂ bzw. B₁₁ und B₁₂ zu haben, wie in Figur 3 gezeigt ist. In diesem Fall ist es nicht erforderlich, für die TSC- und TSR-Teile die gleiche Anordnung von Sekundärwicklungen zu haben, soweit es die Anzahl der Wicklungen oder ihre Spannungsbemessung betrifft. Bei einer anderen Anordnung, wenn die TSC- und TSR-Teile nicht zur gleichen Zeit aktiviert sein müssen, können beide Teile auf dieselben Sekundärwicklungen W_{f}, W₁ und W₂ des Transformators zurückgreifen, sollten aber getrennte Ventilgruppen B₁, B₂ bzw. B₁₁ und B₁₂ aufweisen, wie in Figur 4 gezeigt. Eine andere Vorgehensweise würde sein, für die TSC- und TSR-Teile zwar gemeinsame Sekundärwicklungen des Transformators T und gemeinsame Ventilgruppen B₁, B₂ zu haben, aber zusätzliche statische Schalter BSS₁₁, BSS₁₂ vorzusehen, um zwischen Beaufschlagung des Kondensators C oder der Drossel D wählen zu können, wie in Figur 5 gezeigt ist.

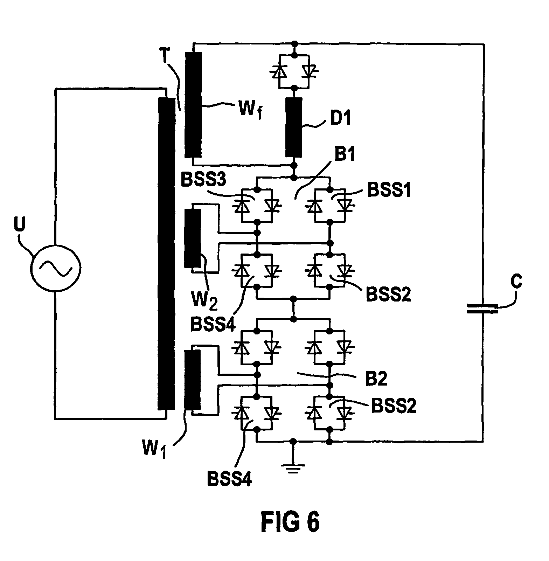

Zur Vereinfachung der in den Figuren 3 bis 5 dargestellten Schaltungsanordnungen für einen Arbeitsbereich von induktiver bis kapazitiver Blindleistung kann man auch parallel zu der weiteren, nicht mit einem Brückenzweig belegten Teilwicklung eine Reihenschaltung aus einer Drossel oder einer Kapazität und zwei antiparallel geschalteten Ventilen anordnen, wie es in Figur 6 dargestellt ist. Bei einer derartigen Ausgestaltung der Schaltungsanordnung wird die Sekundärseite des Transformators mit einer induktiven bzw. einer kapazitiven Grundlast belastet, wobei diese Grundlast durch Zuschaltung einer in ihrer Größe steuerbaren kapazitiven bzw. induktiven Zusatzlast reduziert werden kann. Bei ausgeschalteter Grundlast ist eine Belastung nur durch die steuerbare Zusatzlast gegeben.

In Anlehnung an Figur 1 zeigt die Figur 6 eine Schaltungsanordnung mit drei Teilwicklungen Wf, W1 und W2 auf der Sekundärseite des Transformators T, wobei die Teilwicklung W1 und W2 jeweils mit einer Brückenschaltung B1 bzw. B2 verbunden sind und in jedem Brückenzweig antiparallel geschaltete statische Schalter BSS1...4 angeordnet sind. Parallel zu der weiteren Teilwicklung Wf ist eine Reihenschaltung aus einer Drossel D1 und zwei antiparallel geschalteten Ventilen V1, V2 angeordnet, wobei die Ventile einen zusätzlichen statischen Schalter bilden können, um gegebenenfalls den Stromfluss durch die Drossel zu sperren. - Wenn die Sekundärseite des Transformators T induktiv belastet ist, kann anstelle der Drossel D1 eine Kapazität eingefügt sein.

Für manche der beschriebenen Anordnungen reicht möglicherweise die Spannungsfestigkeit der statischen Schalter nicht aus; um dennoch die erforderliche Spannungsfestigkeit zu gewährleisten, würde ein ökonomisches Vorgehen darin bestehen, in Reihe mit dem Kondensator C oder der Drossel D zusätzliche Ventile einzufügen. - In den Beispielen gemäß den Figuren 1 bis 5 ist es im übrigen möglich, die sekundäre Festwicklung W_{f} zur Versorgung anderer Lasten zu benutzen.

Die Erfindung ist vorliegend zum besseren Verständnis anhand von Ausführungsbeispielen erläutert worden. Der Schutzbereich wird jedoch durch den Gegenstand der Schutzansprüche bestimmt und ist nicht ausschließlich auf die Ausführungsbeispiele beschränkt.

Die in den Figuren 1-3 und 5 gezeigten Ausführungbeispiele fallen nicht unter die Ansprüche.

## Patentansprüche

1. Schaltungsanordnung zur statischen Blindleistungskompensation mit einem Transformator, dessen Primärseite an eine Wechselspannungsquelle angeschlossen ist und dessen Sekundärseite eine feste Wicklung (W_{f}) und wenigstens zwei Steuerwicklungen (W₁, W₂) aufweist, wobei jede Steuerwicklung (W₁, W₂) mit jeweils einer Brückenschaltung (B1, B2) verbunden ist, die in jedem Brückenzweig zwei antiparallel geschaltete statische Schalter (BSS1...BSS4) aufweist, wobei die Brückenschaltungen (B1, B2) mit der festen Wicklung (W_{f}) elektrisch in Reihe geschaltet und jeweils mit einem Blindwiderstands-Element (C) verbunden sind,
**dadurch gekennzeichnet, dass**
die zwei Steuerwicklungen (W₁, W₂) mit jeweils einer zusätzlichen Brückenschaltung (B11, B12) verbunden sind, die in jedem Brückenzweig zwei antiparallel geschaltete statische Schalter aufweist, wobei die zusätzlichen Brückenschaltungen (B11, B12) mit der festen Wicklung (W_{f}) elektrisch in Reihe geschaltet und mit einem weiteren Blindwiderstands-Element (D) verbunden sind.

2. Schaltungsanordnung nach Anspruch 1,
**dadurch gekennzeichnet, dass**
eines der beiden Blindwiderstands-Elemente als Kapazität (C) und das andere der beiden Blindwiderstands-Elemente als Drossel (D) ausgebildet ist.

3. Schaltungsanordnung zur statischen Blindleistungskompensation mit einem Transformator, dessen Primärseite an eine Wechselspannungsquelle angeschlossen ist und dessen Sekundärseite eine feste Wicklung (W_{f}) und wenigstens zwei Steuerwicklungen (W₁, W₂) aufweist, wobei jede Steuerwicklung (W₁, W₂) mit jeweils einer Brückenschaltung (B1, B2) verbunden ist, die in jedem Brückenzweig zwei antiparallel geschaltete statische Schalter (BSS1...BSS4) aufweist, wobei die Brückenschaltungen (B1, B2) mit der festen Wicklung (W_{f}) elektrisch in Reihe geschaltet und jeweils mit einem Blindwiderstands-Element verbunden sind,
**dadurch gekennzeichnet, dass**
eine Drossel (D1) oder eine Kapazität (C) sowie ein antiparallel geschalteter statischer Schalter mit der festen Wicklung (W_{f}) elektrisch in Reihe geschaltet sind.

## Claims

1. Circuit arrangement for static reactance compensation having a transformer the primary side of which is connected to an alternating current source and the secondary side of which comprises a fixed winding (Wf) and at least two control windings (W1, W2), wherein each control windings (W1, W2) is each connected to a bridge circuit (B1,B2) which comprise , in each branch of the bridge, two anti-parallel connected, static switches (BSS1...BSS4) where the bridge circuits (B1,B2) are electrically connected in series with the fixed winding (Wf) and are connected to a reactance element (C),
**characterized in that**
the two control windings (W1, W2) each are connected to an additional bridge circuit (B11,B12) which comprise, in each branch of the bridge, two anti-parallel connected, static switches, where the additional bridge circuits (B11,B12) are electrically connected in series with the fixed winding (Wf)and are connected to a further reactance element (D).

2. Circuit arrangement according to claim 1,
**characterized in that**
one of the two reactance elements is formed as a capacitor (C), and the other of the two reactance elements is formed as an inductor (D).

3. Circuit arrangement for static reactance compensation having a transformer the primary side of which is connected to an alternating current source and the secondary side of which comprises a fixed winding (Wf) and at least two control windings (W1, W2), wherein each control windings (W1, W2) is each connected to a bridge circuit (B1,B2) which comprise , in each branch of the bridge, two anti-parallel connected, static switches (BSS1...BSS4) where the bridge circuits (B1,B2) are electrically connected in series with the fixed winding (Wf) and are connected to a reactance element (C),
**characterized in that**
an inductor (D1) or a capacitor (C) as well as an anti-parallel connected, static switch are connected in series with the fixed winding (Wf).

## Revendications

1. Circuit pour la compensation statique d'une puissance réactive, avec un transformateur, dont le primaire est connecté à une source de tension alternative et dont le secondaire présente un enroulement fixe (W_{f}) et au moins deux enroulements de commande (W₁, W₂), où chaque enroulement de commande (W₁, W₂), est connecté avec un montage en pont (B1, B2), qui en chaque bras du pont présente deux contacteurs statiques (BSS1 ... BSS4) connectés antiparallèlement, où les montages en pont (B1, B2), sont connectés électriquement en série avec l'enroulement fixe (W_{f}) et chacun d'eux est couplé avec un élément d'impédance réactive (C) **caractérisé en ce que**, les deux enroulements de commande (W₁, W₂), sont connectés chacun d'eux avec un montage en pont (B11, B12), supplémentaire, qui en chaque bras du pont présente deux contacteurs statiques connectés antiparallèlement, où les montages en pont (B11, B12), supplémentaires sont connectés électriquement en série avec l'enroulement fixe (W_{f}) et sont couplés avec un autre élément d'impédance réactive (D).

2. Circuit selon la revendication 1, **caractérisé en ce que**, l'un d'entre les deux éléments d'impédance réactive est formé comme condensateur (C) et l'autre d'entre les deux éléments d'impédance réactive est formé comme bobine de choc (D).

3. Circuit pour la compensation statique de la puissance réactive, avec un transformateur, dont le primaire est connecté à une source de tension alternative et dont le secondaire présente un enroulement fixe (W_{f}) et au moins deux enroulements de commande (W₁, W₂), où chaque enroulement de commande (W₁, W₂), est connecté avec un montage en pont (B1, B2), qui en chaque bras du pont présente deux contacteurs statiques (BSS1 ... BSS4) connectés antiparallèlement, où les montages en pont (B1, B2), sont connectés électriquement en série avec l'enroulement fixe (W_{f}) et chacun d'eux est couplé avec un élément d'impédance réactive, **caractérisé en ce que**, une bobine de choc (D1) ou un condensateur (C) aussi bien qu'un contacteur statique connecté antiparallèlement sont connectés électriquement en parallèle avec l'enroulement fixe (W_{f}).
